# FASCICULE DE BREVET EUROPEEN

(11) **EP 3 230 569 B1**
(45) Date de publication et mention de la délivrance du brevet: **04.12.2019**
(21) Numéro de dépôt: 15823625.7
(22) Date de dépôt: 09.12.2015
(51) Int. Cl.: F02B 75/04, F16C 9/04

(54) **DISPOSITIF DE TRANSMISSION D'UN MOTEUR, NOTAMMENT POUR UN MOTEUR A TAUX DE COMPRESSION ET/OU A CYLINDREE VARIABLE**
GETRIEBEVORRICHTUNG EINES MOTORS, INSBESONDERE EINES MOTORS MIT VARIABLEM VERDICHTUNGSVERHÄLTNIS UND/ODER MIT VARIABLER VERDRÄNGUNG
TRANSMISSION DEVICE OF AN ENGINE, PARTICULARLY FOR AN ENGINE WITH VARIABLE COMPRESSION RATE AND/OR VARIABLE DISPLACEMENT

(30) Priorité: 12.12.2014 FR 1462389
(43) Date de publication de la demande: 18.10.2017
(73) Titulaire: MCE-5 Development, 69003 Lyon (FR); Rabhi, Vianney, 69006 Lyon (FR)
(72) Inventeur: HUGON, Rodolphe, 69720 Saint Bonnet de Mure (FR); BIGOT, Sylvain, 64000 Pau (FR); DUCHEMIN, Matthieu, 69120 Vaulx en Velin (FR); DELOBRE, Guillaume, 69500 Bron (FR); SCHWENCK, Benoit, 69007 Lyon (FR)
(74) Mandataire: IP Trust
(86) Numéro de dépôt international: PCT/FR2015/053391
(87) Numéro de publication internationale: WO 2016/092211

(56) Documents cités:
- WO-A1-03/008783
- DE-A1- 4 034 808
- FR-A1- 2 810 696
- FR-A1- 2 867 515
- GB-A- 2 324 838

## Description

### DOMAINE DE L'INVENTION

L'invention concerne un dispositif de transmission d'un moteur, notamment pour un moteur à taux de compression et/ou à cylindrée variable.

### ARRIERE PLAN TECHNOLOGIQUE DE L'INVENTION

On connaît de EP1407125, de FR2867515 ou de FR2810696 un tel dispositif. Il comprend, dans un carter-cylindres :
- un piston de combustion, apte à se déplacer dans un cylindre du moteur et solidaire d'un organe de transmission ;
- une roue dentée coopérant avec une première crémaillère de l'organe de transmission et assurant la transmission du mouvement entre le piston de combustion et un vilebrequin du moteur ;
- une bielle coopérant en une première extrémité avec la roue dentée et en une seconde extrémité avec le vilebrequin ;

Un organe de commande, coopérant également avec la roue permet d'ajuster la position de la roue dans le moteur, et de déplacer l'extrémité de la course du piston dans le cylindre. On réalise ainsi un moteur dont le taux de compression et, le cas échéant, la cylindrée peut être rendu variable.

Les éléments du bloc-cylindres peuvent être réalisés en des matériaux différents afin d'optimiser le poids d'ensemble du moteur sans compromettre ses performances. Ainsi, il est souvent choisi d'utiliser un vilebrequin en acier alors que le carter-cylindres est souvent choisi en aluminium. Dans ce cas, et en conséquence de l'échauffement des éléments du moteur lors de son fonctionnement, la dilatation différentielle entre les pièces de matériaux différents engendre un déplacement des organes mobiles du dispositif de transmission les uns par rapport aux autres.

En conséquence, les organes mobiles du dispositif de transmission se placent, lors du fonctionnement du moteur, dans une position d'équilibre qui peut s'écarter de la position de conception, initialement souhaitée. Cette position d'équilibre, dans les dispositifs de transmission connus de l'état de la technique, n'est pas contrôlée. Elle résulte des degrés de liberté et des degrés de blocage imposés par la nature des liaisons existant entre les différents organes mobiles composant le dispositif de transmission. Cette position d'équilibre, lorsqu'elle n'est pas contrôlée, peut conduire à une usure excessive des pièces composant les organes mobiles ; ou être une source de bruit de fonctionnement. Il peut par ailleurs exister plusieurs positions d'équilibre, stables, dans lesquels les organes mobiles peuvent se placer selon la nature des perturbations qu'ils reçoivent et qui les écartent de leurs positions de conception.

On a ainsi représenté schématiquement sur les figures la et 1b, respectivement, la position de conception et une position d'équilibre de certains organes mobiles du dispositif de transmission d'un moteur à taux de compression variable de l'état de la technique.

Le vilebrequin 9 repose sur les paliers d'un carter-cylindres 100, comportant 3 cylindres identifiés a, b, et c sur les figures la et 1b. Dans chaque cylindre, un piston de combustion 2a, 2b, 2c est solidaire d'un organe de transmission 3a, 3b, 3c. Les bielles 6a, 6b, 6c sont respectivement liées aux roues dentées 5a, 5b, 5c et au vilebrequin 9.

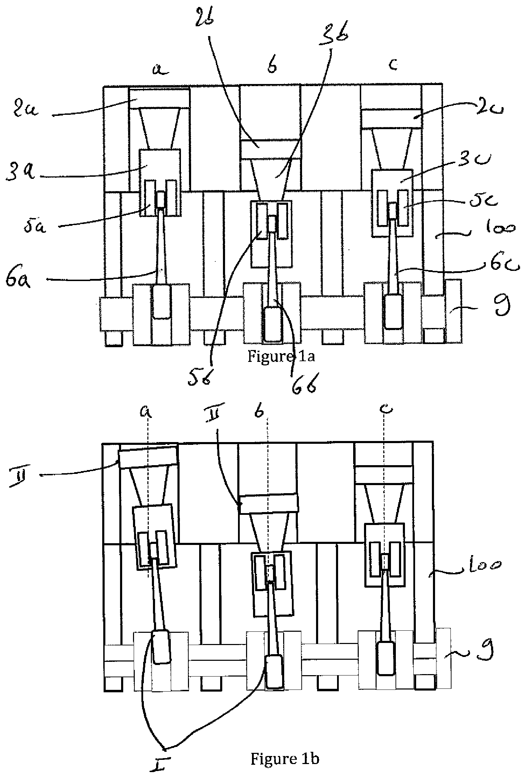

Le vilebrequin, en acier, se dilate moins que le carter-cylindres, en aluminium. En conséquence, les manetons du vilebrequin sur lesquels sont associées les bielles ne sont plus parfaitement alignés avec chacun des cylindres. On observe ainsi sur la figure 1b que les organes mobiles associés aux cylindres a, b se sont placés dans une position d'équilibre qui s'écarte de la position de conception de la figure la, selon laquelle les organes mobiles d'un même ensemble-cylindre sont tous alignés entre eux et parallèles à l'axe principal du cylindre. Le cylindre c quant à lui est dans la position de conception.

Cette position d'équilibre non contrôlée conduit à une usure accélérée des organes mobiles, notamment aux niveaux I et II des coussinets de bielles et des jupes de piston qui subissent des frottements particulièrement importants comme cela est remarquable sur la figure 1b. Et les frottements, d'une manière générale, peuvent notablement diminuer le rendement du moteur et/ou la puissance transmise.

Outre le phénomène de dilatation différentielle qui vient d'être décrit, d'autres phénomènes peuvent être à l'origine de perturbation conduisant à placer les organes mobiles du dispositif de transmission dans une position d'équilibre différent de la position de conception. Il peut s'agir par exemple de l'usure des organes, à leur déformation sous charge ou de la présence de jeux fonctionnels excessifs.

### OBJET DE L'INVENTION

Un objet de l'invention est donc de déterminer la nature des liaisons existant entre certains organes mobiles d'un dispositif de transmission d'un moteur, de sorte à contrôler la position de fonctionnement occupée par ces organes, lorsque le dispositif de transmission est soumis à des perturbations.

L'invention vise notamment à éviter ou limiter les frottements qui apparaissent au niveau des jupes de piston et/ou des coussinets de bielle en conséquence de la dilatation différentielle du vilebrequin et du carter-cylindres.

### BREVE DESCRIPTION DE L'INVENTION

En vue de la réalisation de ce but, l'objet de l'invention propose un dispositif de transmission notamment pour un moteur à taux de compression et/ou cylindrée variable, comprenant dans un carter-cylindres :
- un piston de combustion, apte à se déplacer dans un cylindre de combustion du moteur, et solidaire d'un organe de transmission ;
- une roue dentée coopérant avec une première crémaillère de l'organe de transmission et assurant la transmission du mouvement entre le piston de combustion et un vilebrequin du moteur ;
- une bielle coopérant, en une première extrémité, avec la roue dentée et, en une seconde extrémité, avec le vilebrequin ;
- un organe de commande coopérant avec la roue dentée et solidaire d'un piston de commande.

Selon l'invention le dispositif de transmission est remarquable en ce que le piston de combustion et l'organe de transmission sont en liaison glissière avec le carter-cylindres suivant une direction principale.

De la sorte on évite ou limite la formation de frottement au niveau de la jupe du piston de combustion en contrôlant parfaitement la position de fonctionnement du piston, même en présence de perturbations.

Selon l'invention, la liaison entre la roue dentée et la bielle comprend une liaison linéaire annulaire de direction longitudinale; la liaison entre la roue dentée et l'organe de transmission est formée d'une liaison pignon-crémaillère et d'une liaison linéaire annulaire suivant une direction principale ; la liaison entre la roue dentée et l'organe de commande est formée d'une liaison pignon-crémaillère et d'une liaison linéaire annulaire suivant une direction principale.

Ainsi, la roue peut être positionnée en alignement avec l'organe de transmission selon une direction longitudinale du moteur ; et la bielle peut se déplacer selon une direction longitudinale et accommoder les perturbations telles que celles issues de la dilatation différentielle du vilebrequin. On évite ou limite ainsi les frottements et usures au niveau des coussinets de bielles.

De manière préférée, la liaison entre le piston de commande et le carter-cylindres comprend une liaison linéaire annulaire de direction principale et de centre formée par le piston de commande.

L'organe et le piston de commande permettant de fermer la liaison cinématique entre la roue et le carter-cylindres, cette liaison permet d'améliorer le positionnement angulaire selon un axe principal de la roue par rapport à la bielle et conduit ainsi à une meilleure maitrise des frottements entre la roue et la bielle, et notamment au niveau des coussinets de bielle.

Selon un premier mode de réalisation, et pour améliorer le contrôle des mouvements de rotation de l'organe de commande, la liaison entre l'organe de commande et le carter-cylindres comprend une liaison linéaire rectiligne de direction longitudinale. Et dans une variante à ce premier mode de réalisation, la liaison entre l'organe de commande et le carter-cylindres comprend une liaison linéaire annulaire de direction principale.

Selon d'autres caractéristiques avantageuses et non limitatives de l'invention, prises seules ou en combinaison :
- la liaison glissière se décompose en :
   - une liaison linéaire annulaire entre le piston de combustion et le cylindre de combustion de direction principale et de centre formé par le piston de combustion;
   - une liaison linéaire rectiligne de direction longitudinale et une liaison ponctuelle de direction longitudinale entre l'organe de transmission et le carter-cylindres.
- la liaison linéaire rectiligne entre l'organe de transmission et le carter-cylindres est réalisée par un rouleau prenant appui sur une platine du carter-cylindres et sur l'organe de transmission.
- la liaison ponctuelle entre l'organe de transmission et le carter-cylindres comprend une nervure et une rainure de guidage, adaptée pour recevoir la nervure, l'une étant disposée sur le rouleau et l'autre sur l'organe de transmission.
- la roue dentée présente un évidemment central dans lequel débouche un alésage pour la mise en place d'un pied de la bielle par l'intermédiaire d'un axe de transmission et dans lequel la liaison linéaire annulaire entre la roue dentée et la bielle est obtenue par :
   - un espacement entre les surfaces internes de l'évidemment central de la roue dentée et les faces latérales du pied de bielle permettant le déplacement en translation de la bielle sur l'axe de transmission;
   - un profil arrondi de l'alésage du pied de bielle permettant le rotulage de la bielle dans l'évidemment central.
- la liaison linéaire annulaire entre la roue dentée et l'organe de transmission comprend respectivement une bande de roulement de la roue dentée en contact avec une piste de roulement de l'organe de transmission, dont les formes bombée et en gouttière coopèrent.
- la liaison linéaire annulaire entre la roue dentée et l'organe de commande comprend respectivement une bande de roulement de la roue dentée en contact avec une piste de roulement de l'organe de commande, dont les formes bombée et en gouttière coopèrent.
- La liaison linéaire rectiligne entre l'organe de commande et le carter-cylindres est réalisée par le contact entre une surface d'appui de l'organe de commande avec une surface du carter-cylindres, l'une étant cylindrique d'axe longitudinal, l'autre étant plane.
- Selon une variante, la liaison linéaire annulaire entre l'organe de commande et le carter-cylindres est réalisé par un corps formé d'une portion sphérique en contact avec un évidemment complémentaire du carter-cylindres, le corps (91) comportant sur la face opposée à la portion sphérique une languette ou une rainure coopérant, respectivement, avec une rainure ou une languette de l'organe de commande.
- le carter-cylindres est muni d'un dispositif presseur de compensation des jeux fonctionnels.

### BREVE DESCRIPTION DES DESSINS

L'invention sera mieux comprise à la lumière de la description qui suit d'un mode de réalisation particulier et non limitatif et en référence aux figures ci-jointes parmi lesquelles :
- les figures 1a et 1b représente schématiquement et respectivement la position de conception et une position d'équilibre de certains organes mobiles d'un moteur de l'état de la technique.
- la figure 2 représente une coupe de principe d'un moteur à taux de compression variable.
- les figures 3a et 3b représentent des vues en perspective et éclatées de certains éléments du dispositif de transmission selon un exemple particulier de mise en œuvre de l'invention.
- La figure 3c représente une vue latérale de certains éléments du dispositif de transmission selon un exemple particulier de mise en œuvre de l'invention.
- La figure 3d représente une coupe selon l'axe F de la figure 3c de certains éléments du dispositif de transmission selon un exemple particulier de mise en œuvre de l'invention.
- les figures 4 et 5 représentent des vues en perspectives et éclatées de la roue dentée dans un exemple particulier de mise en œuvre de l'invention.
- la figure 6 représente une vue en perspective de la bielle dans un exemple particulier de mise en œuvre de l'invention.
- la figure 7 et 7bis représentent des coupes de l'organe de commande et du piston de commande selon deux exemples particuliers de mise en œuvre de l'invention.
- la figure 8 représente schématiquement une position d'équilibre de certains éléments mobile d'un moteur selon l'invention.

### DESCRIPTION DETAILLEE DE L'INVENTION

Dans l'ensemble de la description qui suit, et en référence aux figures, on utilisera par convention les définitions suivantes :
- la direction longitudinale est la direction définie par l'axe principal du vilebrequin 9 ;
- la direction principale est la direction définie par l'axe principal du cylindre de combustion 2 ;
- la direction transversale est la direction définie par la direction perpendiculaire aux deux directions précédentes.

Par ailleurs, on désignera par «perturbations» dans la présente demande tous les phénomènes tendant à placer les organes mobiles, lorsque le moteur est en fonctionnement, dans une position d'équilibre différente de la position de conception. Il peut s'agir, par exemple et sans exhaustivité, de l'usure ou de la tolérance de fabrication des organes conduisant à des dimensions qui s'écartent de leurs dimensions exactes de conception, ou de déplacements liés à la dilatation différentiée entre ces organes, à leur déformation sous charge ou encore à la présence de jeux fonctionnels excessifs.

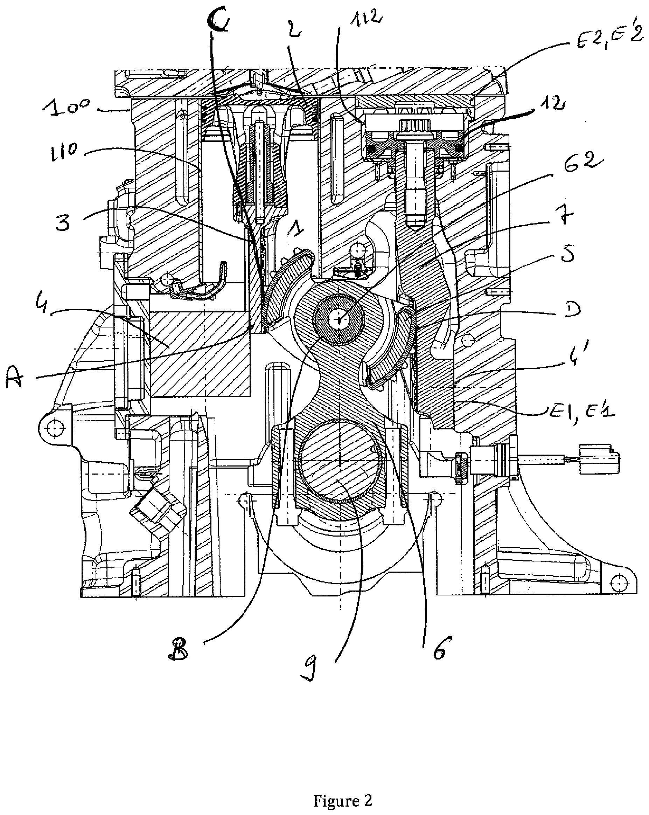

Sur la figure 2, qui représente une coupe de principe d'un moteur à taux de compression et/ou cylindrée variable, un carter-cylindres 100 comprend au moins un cylindre de combustion 110 dans lequel se déplace en translation guidée un piston de combustion 2 entrainant la rotation d'un vilebrequin 9 par l'intermédiaire d'un dispositif de transmission 1.

Le dispositif de transmission comprend un organe de transmission 3 solidaire du piston de combustion 2 et coopérant d'une part avec un premier dispositif de liaison 4 prenant appui sur une paroi du carter-cylindres 100 et d'autre part avec un premier côté d'une roue dentée 5.

L'organe de transmission 3 est pourvu sur l'une de ses faces d'une crémaillère de forte dimension dont les dents coopèrent avec celles de la roue dentée 5.

La roue dentée 5 est reliée, par l'intermédiaire d'un axe de transmission 62, à une première extrémité d'une bielle 6. La seconde extrémité de la bielle 6 est reliée à un vilebrequin 9 afin de réaliser la transmission du mouvement.

La roue dentée 5 coopère sur un second côté, opposé à l'organe de transmission 3, avec une crémaillère d'un organe de commande 7 apte à se déplacer selon la direction principale en coopération avec un second dispositif de liaison 4'.

L'organe de commande 7 est piloté par un dispositif de contrôle comportant un vérin formé d'un piston de commande 12 guidé dans un cylindre de commande 112 du carter-cylindres 100. Le dispositif de contrôle assure le déplacement en translation de l'organe de commande 7 suivant la direction principale.

En fonctionnement, le mouvement de translation du piston de combustion 2 et de l'organe de transmission 3 qui lui est solidaire, est initié et entretenu par la combustion du mélange dans le cylindre de combustion 110. Ce mouvement est guidé par la liaison existante entre le piston de combustion 2 et le cylindre de combustion 110, et le dispositif de liaison 4. Le mouvement est transmis à l'ensemble formé de la roue dentée 5 et de la bielle 6 pour déplacer en rotation le vilebrequin 9. La position de l'organe de commande 7 est ajustée selon la direction principale par le dispositif de contrôle. Son déplacement est guidé par le second dispositif de liaison 4' le long de cette direction. Le déplacement de l'organe de commande 7 entraine le pivotement de la roue 5, ce qui a pour effet de déplacer l'extrémité de la course du piston de combustion 2 dans le cylindre de combustion 110. On fait ainsi varier le taux de compression et/ou la cylindrée du moteur.

Selon l'invention, la nature des liaisons existant entre certains organes mobiles qui viennent d'être énumérées est déterminée de sorte à contrôler la position de fonctionnement occupée par ces organes, lorsque le dispositif de transmission 1 est soumis à des perturbations.

L'expression « contrôler la position de fonctionnement » signifie que les degrés de liberté et les degrés de blocage définissant la nature des liaisons, favorisent un déplacement des pièces des organes mobiles par rapport à leurs emplacements idéals de conception vers une position qui ne conduit pas à des frottements excessifs de fonctionnement. Dans le cadre de cette demande, on considèrera qu'un degré de liberté ou un mouvement est « bloqué » dans la mesure ou ce degré ou ce mouvement ne peut s'effectuer au-delà du jeu minimum nécessaire. Par exemple, pour arrêter un mouvement de translation entre deux composants présentant un autre degré de liberté fonctionnel entre eux, un jeu maximum de 0.04 à 0.2mm est admis dans la direction de translation a bloquer

Il est à noter qu'une telle analyse n'est pas aisée, car il s'agit non seulement d'étudier chaque liaison, mais également les interactions entre celles-ci suivant chacun des six degrés de liberté et/ou de blocage, afin de déterminer la combinaison la plus favorable. Il est à noter également que le blocage multiple de certains degrés peut conduire au développement de contraintes dans les pièces favorisant leurs usures, et qu'à contrario un nombre excessif (par rapport à la fonctionnalité attendue de chaque organe) de degrés de liberté peut conduire au dysfonctionnement du dispositif lorsqu'il est soumis à des perturbations, ainsi que cela a été exposé dans l'introduction de cette demande.

Ainsi, les prototypes et les études approfondies menées par les inventeurs de la présente demande ont permis d'établir que certaines liaisons principales du dispositif de transmission 1 qui vient d'être décrit devaient être précisément déterminées, parmi lesquelles :
- La liaison entre l'ensemble formé du piston de combustion 2 et de l'organe de transmission 3, et le carter-cylindres 100.
- La liaison entre la roue dentée 5 et la bielle 6.
- La liaison entre la roue dentée 5 et l'organe de transmission 3.
- La liaison entre la roue dentée 5 et l'organe de commande 7.

La nature exacte de chacune de ces liaisons est détaillée dans les paragraphes qui suivent de la présente description.

### Liaisons A entre l'ensemble formé du piston de combustion 2 et de l'organe de transmission 3, et le carter-cylindres 100.

Selon l'invention, l'ensemble formé du piston de combustion 2 et de l'organe de transmission 3 est en liaison glissière A avec le carter-cylindres 100 suivant une direction principale.

Comme cela est bien connu en soi, la liaison glissière assure cinq degrés de blocage et autorise un unique mouvement de translation.

Il s'agit donc, selon l'invention, de bloquer tout mouvement de l'organe de transmission 3 autre qu'une translation suivant une direction principale. En d'autres termes, le dispositif de liaison 4 est configuré pour bloquer tout mouvement de l'organe de transmission 3 autre qu'une translation suivant une direction principale. Il s'agit notamment de bloquer un mouvement de rotulage dans le cylindre 110 de l'organe de transmission 3 et du piston de combustion 2 qui induirait des frottements sur les parois internes de ce cylindre.

Pour minimiser les frottements intervenant entre les pièces de la liaison, cette liaison glissière A se décompose préférentiellement en :
- Une liaison linéaire annulaire A1 entre le piston de combustion 2 et le cylindre de combustion 110 dont le centre est formé par le piston 2 et de direction principale.
- Une liaison linéaire rectiligne A21 de direction longitudinale, combinée à une liaison ponctuelle A22 de direction longitudinale entre l'organe de transmission 3 et le carter-cylindres 100.

La liaison linéaire annulaire A1 s'oppose aux deux translations suivant les directions longitudinale et transversale du piston de combustion 2, tous les autres mouvements sont libres. On assure ainsi des frottements minimums entre les surfaces en contact du piston de combustion 2 avec celle du cylindre de combustion 110.

La liaison linéaire rectiligne A21 s'oppose à la translation de l'organe de transmission 3 suivant la direction transversale et à sa rotation suivant l'axe principal du cylindre de combustion 110.

Finalement, la liaison ponctuelle A22 fournie le cinquième degré de blocage de la liaison glissière s'opposant à la translation dans la direction longitudinale de l'organe de transmission 3.

On s'assure ainsi que seul le mouvement de translation selon la direction principale de l'ensemble formé du piston de combustion 2 et de l'organe de transmission 3 par rapport au carter-cylindres 100 est laissé libre. On évite ou on limite ainsi les frottements au niveau de la jupe du piston de combustion et du cylindre. Les cinq autres degrés de liberté possibles de cet organe sont bloqués, évitant ainsi les situations de mise sous contrainte des pièces pouvant entrainer des frottements et/ou bruit de fonctionnement excessif, ou leurs usures.

### Liaison C entre la roue dentée 5 et l'organe de transmission 3

On rappelle que la roue dentée 5 coopère avec une crémaillère de forte dimension formée sur l'organe de transmission 3. A ce titre, la liaison C entre la roue dentée 5 et l'organe de transmission 3 comprend une première liaison pignon-crémaillère.

Cette liaison pignon-crémaillère peut se définir comme étant une liaison linéaire rectiligne, dans laquelle la denture de roue est représentée par une ligne sensiblement parallèle à l'axe de la roue passant par le cercle primitif de la denture, et la denture de crémaillère est représentée par un plan orienté selon l'angle de pression des dentures, communément 20°. Cette liaison présente :
- Deux degrés de liberté en translation dans le plan la définissant,
- Deux degrés de liberté en rotation, un d'axe définit par la direction de la ligne, l'autre défini par la normale au plan caractérisant la liaison.

Selon l'invention, la liaison C entre la roue dentée 5 et l'organe de transmission 3 comprend de plus une liaison linéaire annulaire de direction principale.

Cette combinaison de liaisons conduit à bloquer le mouvement de translation relatif de direction longitudinale et transversale entre la roue dentée 5 et l'organe de transmission 3 et à autoriser les mouvements de rotations selon les axes longitudinal et principal de la roue dentée 5 par rapport à l'organe de transmission 3 et de translation suivant l'axe principal.

Il s'agit donc, selon l'invention, de maintenir centrée la roue dentée 5 sur la crémaillère de forte dimension de l'organe de transmission 3, sans que cela n'induise de contraintes importantes sur la roue dentée 5 ou sur l'organe de commande 7. La roue dentée 5 et/ou l'organe de transmission 3 sont configurés pour être maintenus centrés l'un par rapport à l'autre.

On note que dans les solutions connues de la technique, le déplacement longitudinal de la roue dentée 5 sur l'organe de transmission 3 était possible, par glissement. A cet effet, la largeur des dents de la roue dentée 5 était réduite de manière à permettre ce déplacement par glissement.

Selon la présente invention, le blocage de ce mouvement de translation par la liaison C permet de maximiser la largeur des dents de la roue dentée 5 et donc de maximiser la charge transmissible par le dispositif de transmission 1. Les performances du moteur en sont améliorées pour un encombrement des composants inchangé (meilleur couple moteur et régime moteur plus important).

### Liaison D entre la roue dentée 5 et l'organe de commande 7

Le dispositif de transmission comporte également un organe de commande 7 permettant d'ajuster l'extrémité de la course du piston dans le cylindre de combustion 110.

La liaison D entre la roue dentée 5 et l'organe de commande 7 comprend une liaison linéaire annulaire de direction principale. L'organe de commande 7 étant muni d'une crémaillère de forte dimension coopérant avec la roue dentée 5, la liaison comprend également une liaison pignon-crémaillère.

La situation de cette liaison est donc tout à fait similaire à la liaison C vue précédemment. Et en conséquence, la roue dentée 5 et/ou l'organe de commande 7 sont configurés pour être eux aussi maintenus centrés l'un par rapport à l'autre.

Cette combinaison de liaisons conduit donc à bloquer les mouvements de translation relatifs de direction longitudinale et transversale entre la roue dentée 5 et l'organe de commande 7 et autoriser les mouvements de rotations selon les axes longitudinal et principal de la roue dentée 5 par rapport à l'organe de transmission 7 et de translation suivant l'axe principal.

Il s'agit donc d'éviter que des contraintes s'appliquent à la roue dentée 5 et conduisent à la déplacer du plan dans laquelle les liaisons précédentes la maintiennent.

La combinaison des liaisons A, C et D permet de positionner l'organe de transmission 3, la roue 5 et l'organe de commande 7 en alignement et dans une position déterminée vis-à-vis du carter-cylindres 100.

### Liaison B entre la roue dentée 5 et la bielle 6

Selon l'invention, la liaison B entre la roue dentée 5 et la bielle 6 comprend une liaison linéaire annulaire de direction longitudinale.

Comme on l'a vue précédemment, une liaison linéaire annulaire s'oppose à deux mouvements de translation. Dans le cas présent, il s'agit de s'opposer à la translation suivant les directions principales et transversales de la bielle 6 relativement à la roue dentée 5. Tous les autres mouvements sont libres.

La rotation de la bielle vis-à-vis de la roue est nécessaire pour transformer le mouvement de translation de direction principale de l'axe de la roue en mouvement de rotation du vilebrequin 9 selon l'axe longitudinal.

La translation du pied de bielle 61 suivant une direction longitudinale relativement à la roue 5 permet de maintenir la bielle 6 parallèle à l'axe du cylindre de combustion 110 même lorsque la tête de bielle 64 est déplacée, en conséquence de la dilatation différentielle du vilebrequin 9 par rapport au carter-cylindres 100. Cette position d'équilibre de la bielle 6 dans le dispositif de transmission 1 permet aussi d'éviter ou de limiter l'usure au niveau des coussinets de bielle, et assure une transmission de puissance maximum.

La liaison B permet de laisser libre les mouvements de rotation entre la bielle 6 et la roue 5 autour de l'axe longitudinal, de l'axe transversal et autour de l'axe principal. Ces deux dernières rotations (autour de l'axe transversal et autour de l'axe principal) permettent de compenser les défauts de perpendicularité pouvant exister par exemple entre le cylindre de combustion 110 et le vilebrequin 9 et, dans ce cas également, limiter les frottements qui se développent dans le dispositif de transmission 1.

En des termes plus généraux, la liaison linéaire annulaire B entre la roue dentée 5 et la bielle 6 permet de dissocier le positionnement, dans un premier plan, des organes mobiles « hauts » du dispositif de transmission 1 (piston de combustion 2, organe de transmission 3, roue dentée 5 et l'organe de commande 7), du positionnement, dans un second plan différent du premier et sensiblement parallèle à celui-ci, de l'organe mobile « bas » de ce dispositif (bielle 6, vilebrequin 9) .

La combinaison des liaisons A, B, C et D qui viennent d'être énumérées conduisent à favoriser, lors du fonctionnement du moteur et indépendamment des perturbations auxquelles il est soumis, l'alignement de la roue dentée 5 avec l'organe de transmission 3 et l'organe de commande 7. La liaison entre la roue dentée 5 et la bielle 6 est suffisamment libre, comme on l'a vu précédemment, pour éviter l'entrainement de la roue dentée 5 par les déplacements d'axe longitudinal du vilebrequin 9.

En d'autres termes, les organes mobiles du dispositif de transmission 1 qui viennent d'être décrit sont tous positionnés selon l'axe longitudinal en relation avec les parois du carter-cylindres 100 et non, comme cela été le cas dans les solutions décrites de l'art antérieur, relativement à la position du vilebrequin 9, par l'intermédiaire de la bielle.

### Liaison E entre l'organe de commande 7 et le carter-cylindres 100

La liaison E entre l'organe de commande 7 et le carter-cylindres 100 comprend, dans sa partie basse, une liaison E1 linéaire rectiligne de direction longitudinale. L'élément de liaison 4' est configuré pour assurer cette liaison.

Cette liaison présente deux degrés de blocage lui permettant d'une part de maintenir l'organe de commande 7 contre le carter-cylindres 100 et, d'autre part, d'éviter la rotation de cet organe autour de son axe principal, c'est-à-dire selon la direction principale définie précédemment.

Cette liaison permet également de maintenir libre le mouvement de translation nécessaire au fonctionnement du moteur, dans la direction principale, de l'organe de transmission 7.

Pour absorber les défauts géométriques pouvant exister entre les organes mobiles selon la direction transversale, la liaison E1 peut être portée par un système de compensation des jeux de fonctionnement, tel que décrit par exemple dans EP1740810, EP1979591 ou encore dans la demande FR14/59791 du 13/10/2014.

Comme on l'a vu, l'organe de commande 7 est solidaire d'un piston de commande 12, guidé dans le cylindre de commande 112. La liaison E comporte également une liaison E2 entre le piston de commande 12 et le cylindre de commande 112 de nature linéaire annulaire de centre formé par le piston de commande 12 et de direction principale.

Toutefois, pour un réglage de taux donné, c'est-à-dire lorsque la position du piston de commande 12 est figée dans le cylindre de commande 112, cette liaison E2 voit son degré de liberté en translation dans la direction principale bloqué, ce qui la réduit à une simple liaison rotule.

Dans cette configuration, le mouvement de rotation de l'organe de commande 7 par rapport au carter-cylindres 100, autour d'un axe de rotation passant par son sommet et de direction transversale, est préservé. Ce mouvement permet d'absorber les perturbations qui se développent dans le dispositif de transmission lors de son fonctionnement, et qui pourraient diminuer son rendement mécanique.

La combinaison des liaisons E1 et E2, en combinaison avec les liaisons A, C et D qui viennent d'être présentées, permet d'assurer une liaison glissière entre l'ensemble formé de l'organe de commande 7 et du piston de commande 12 et le carter-cylindres 100.

### Liaison E' entre l'organe de commande 7 et le carter-cylindres 100

Selon une variante du mode préféré de mise en œuvre de l'invention, la liaison E' entre l'organe de commande 7 et le carter-cylindres 100 comprend, dans sa partie basse, une liaison E'1 linéaire annulaire de direction principale. L'élément de liaison 4' est configuré, dans cette variante, pour assurer cette liaison.

Cette liaison présente deux degrés de blocage lui permettant d'une part de maintenir l'organe de commande 7 contre le carter-cylindres 100 et, d'autre part, d'éviter la translation de la partie basse de l'organe de commande 7 selon une direction longitudinale,

Cette liaison permet également de maintenir libre le mouvement de translation nécessaire au fonctionnement du moteur, dans la direction principale, de l'organe de commande 7 ainsi que la rotation de l'organe de commande autour de l'axe principal.

Similairement à la variante E, la liaison E'1 peut être portée par un système de compensation des jeux de fonctionnement.

La liaison E' comporte également une liaison E'2 entre le piston de commande 12 et le cylindre de commande 112 de nature linéaire annulaire de centre formé par le piston de commande 12 et de direction principale.

Toutefois, et similairement à la variante E, pour un réglage de taux donné, cette liaison E'2 voit son degré de liberté en translation dans la direction principale bloqué, ce qui la réduit à une simple liaison rotule.

Dans cette configuration, le mouvement de rotation de l'organe de commande 7 par rapport au carter-cylindres 100, autour d'un axe de rotation passant par son sommet et de direction principale, est préservé. Ce mouvement permet d'absorber les perturbations qui pourraient diminuer son rendement mécanique.

La combinaison des liaisons E'1, E'2, en combinaison avec les liaisons A, C et D qui viennent d'être présentées, permet d'assurer une liaison glissière entre l'ensemble formé de l'organe de commande 7 et du piston de commande 12 et le carter-cylindres 100.

### Exemple de mise en œuvre de l'invention.

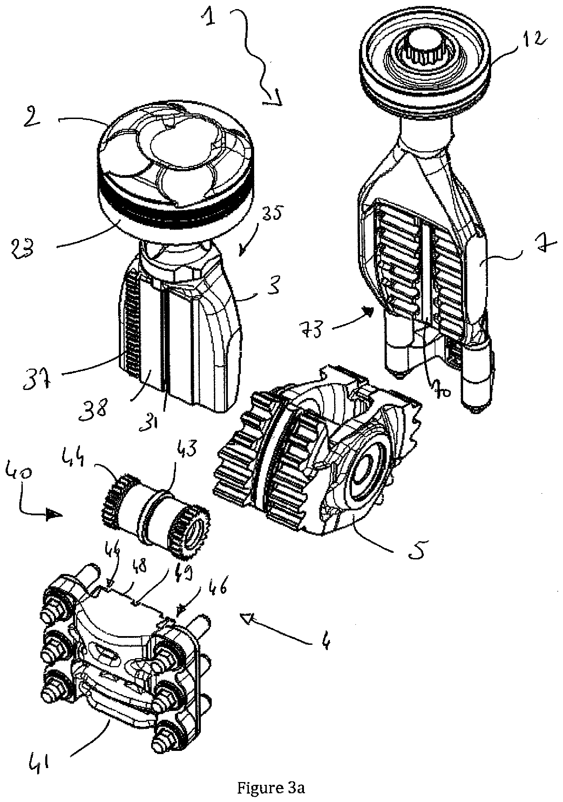

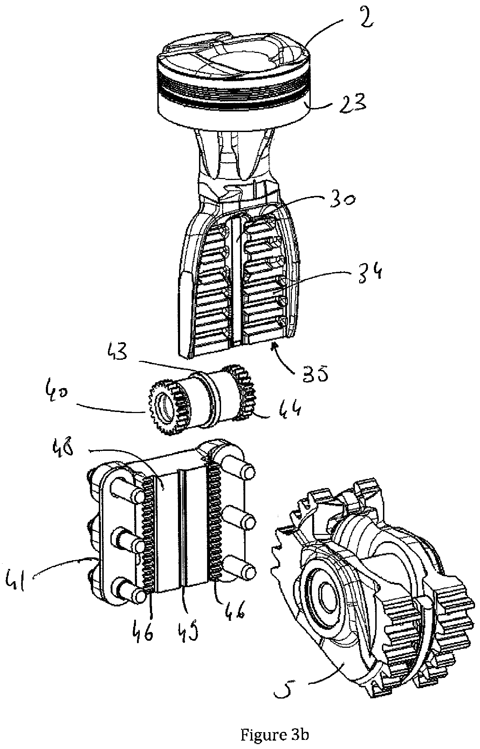

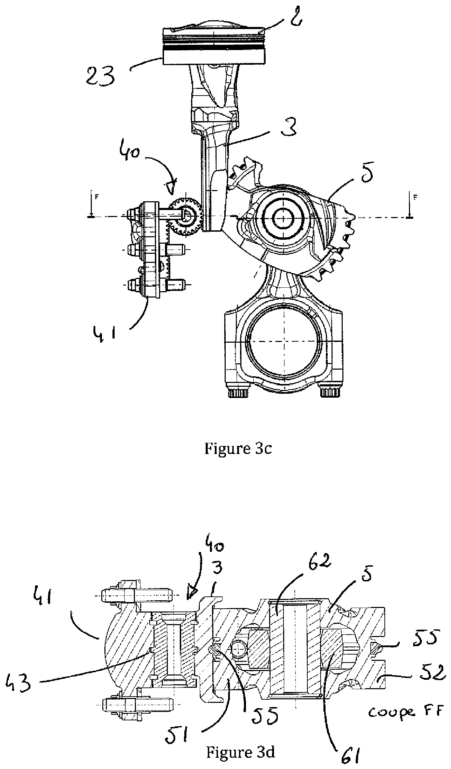

En référence aux figures 3a, 3b, 3c et 3d, on présente un exemple particulier de mise en œuvre du dispositif de transmission 1 selon l'invention.

Le piston de combustion 2 est muni d'une jupe de guidage 23. Dans la mesure où, comme c'est le cas, la jupe de guidage 23 présente une faible hauteur relativement au diamètre du cylindre de combustion 110, la liaison entre le piston de combustion 2 et le cylindre de combustion 110 forment entre eux la liaison linéaire annulaire A1.

Le piston de combustion 2 peut être constitué d'un disque épais pourvu de gorges accueillant les segments de feu, de compression, et racleur ainsi que cela est bien connu en soi.

La qualité de cette liaison peut être améliorée en donnant à la jupe de guidage 23 une forme légèrement bombée limitant ainsi l'intensité des frottements qui se développent au niveau des surfaces de contact.

La liaison entre l'organe de transmission 3 et la paroi 100 du carter-cylindres 100 est réalisé par le dispositif de liaison 4. Celui-ci met en œuvre, dans un mode préféré de réalisation, la liaison linéaire rectiligne A21 et la liaison ponctuelle A22.

Le dispositif de liaison 4 comprend un rouleau 40 constitué d'un corps cylindrique et sur lequel viennent en appuis les surfaces respectives 48, 38 d'une platine 41, solidaire du carter-cylindres 100, et de l'organe de transmission 3. Le rouleau 40 assure la liaison linéaire rectiligne A21 de direction longitudinale. Pour synchroniser le déplacement du piston de combustion 2 et du rouleau 40, ce dernier peut être muni de pignons 44 à chacune de ses extrémités, coopérant avec des crémaillères 46 associées à la platine 41, sur ses bords verticaux. Le premier et/ou le second pignon 44 du rouleau peut également coopérer avec une crémaillère 37 de l'organe de transmission 3. La liaison ponctuelle A22 peut être formée en munissant le corps cylindrique 42 du rouleau 40 d'une nervure de guidage 43. Cette nervure de guidage 43 peut être placée au milieu du corps cylindrique entre les pignons 44. La nervure de guidage 43 est conçue pour se loger d'une part dans une première rainure verticale 49 formée sur la platine 41, et dans une seconde rainure verticale 31 formée sur la surface 38 de l'organe de transmission 3.

Dans une variante de réalisation on peut prévoir que la nervure de guidage 43 du rouleau 40 soit remplacée par une rainure, et les rainures 49, 31 soient remplacées par deux nervures de guidages.

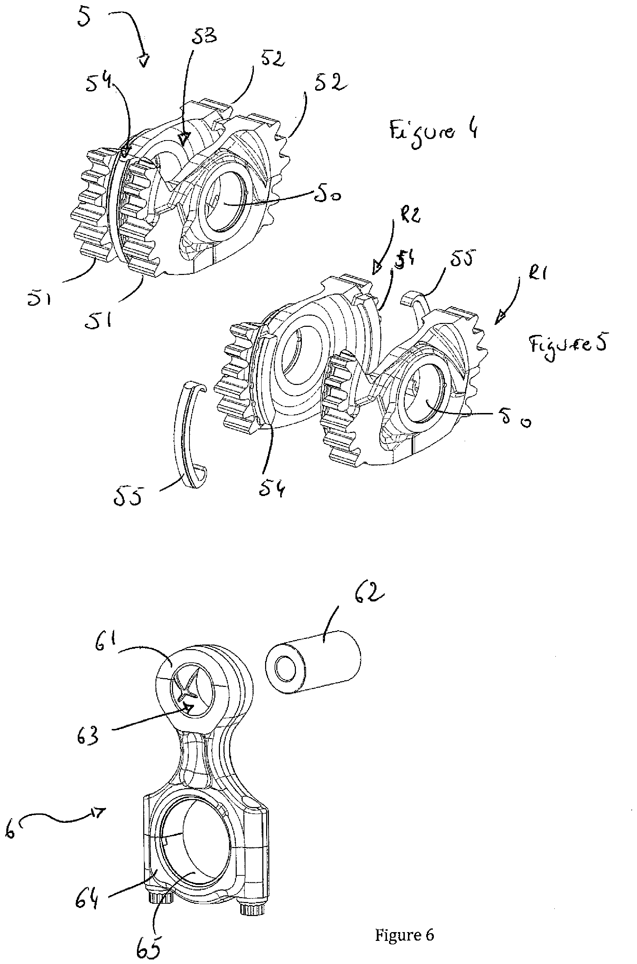

La roue dentée 5, représentée plus en détail sur les figures 4 et 5, peut être constituée de deux demi-roues R1 et R2 assemblées solidairement l'une à l'autre. Elles présentent un évidement central 53 dans lequel débouche un alésage 50 pour la mise en place du pied de bielle 61 par l'intermédiaire d'un axe de transmission 62.

La liaison linéaire annulaire B entre la roue dentée 5 et la bielle 6 est assurée en prévoyant un espacement entre les surfaces internes de l'évidement central et les faces latérales du pied de bielle 61 permettant le déplacement en translation de la bielle sur l'axe de transmission 62.

Elle est également assurée en donnant un profil arrondi à l'alésage 63 du pied de bielle 61 qui reçoit l'axe de transmission 62. Ce profil permet le rotulage de la bielle 6 selon des axes de rotations principales et transversales. La bielle 6 est représentée sur la figure 6.

La roue dentée comporte une première denture 51 coopérant avec les dents 34 de la crémaillère de forte dimension 35 de l'organe de transmission 3. Elle comporte une seconde denture 52 coopérant avec la crémaillère de forte dimension 73 de l'organe de commande 7. Cet agencement entre la roue dentée 5, et respectivement, l'organe de commande 7 et l'organe de transmission 3 forme les liaisons pignons-crémaillères exposées précédemment.

Selon l'invention, cet agencement est également muni d'une liaison linéaire annulaire C, D permettant de maintenir centrée la roue dentée 5 sur les crémaillères de fortes dimensions 35, 73. Cette liaison additionnelle n'était pas présente dans les solutions connues de l'état de la technique. Chaque denture 51, 52 comporte en son milieu une gorge 54 coaxiale au cercle primitif de la roue dentée 5. A l'intérieur de chaque gorge 54 est fixée une bande de roulement 55 au profil bombé. Il peut s'agir par exemple d'une bande de roulement de forme torique. L'organe de transmission 3 et l'organe de commande 7 comportent chacun respectivement une piste de roulement 30, 70, dont la forme en gouttière est complémentaire à celle de la partie bombée de la bande de roulement 55, conçue pour venir en contact et recevoir cette partie bombée, comme cela est visible sur la figure 3d.

Alternativement, les pistes de roulement 30, 70 de l'organe de transmission 3 et de l'organe de commande 7 peuvent être bombées et la bande de roulement 55 de la roue dentée 5 présenter la forme en gouttière complémentaire.

Sur les figures 4 et 5, l'axe de pivotement de la roue dentée 5 située dans l'alésage 50 est positionné au centre du cercle primitif de la roue 5. Cette configuration permet de contrôler par l'intermédiaire de l'organe de commande 7 uniquement le taux de compression du moteur. Il est toutefois possible tout en restant dans le cadre de l'invention de décaler l'axe de pivotement du centre du cercle primitif de la roue dentée 5 afin de faire varier la cinématique de piston de combustion 2 et d'obtenir par ce moyen un contrôle de la cylindrée du moteur.

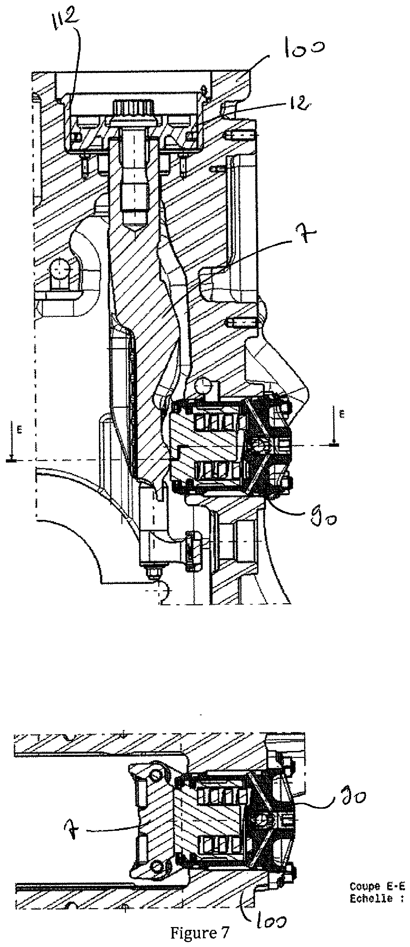

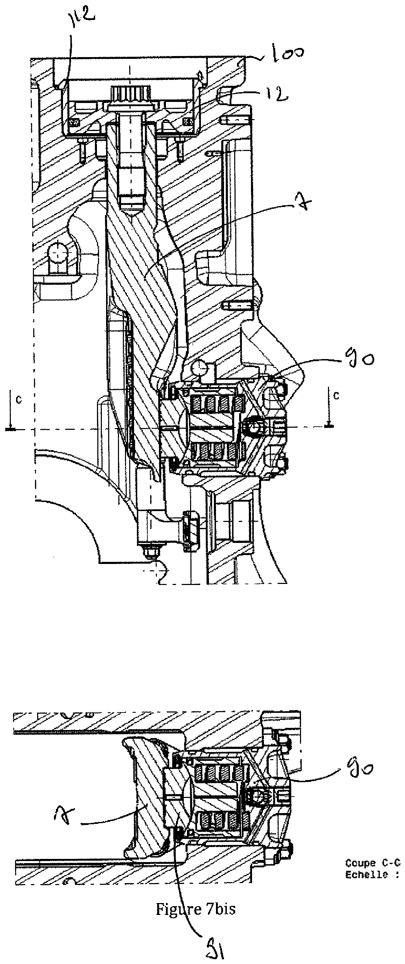

Comme cela est représenté sur les figures 7 et 7bis, l'organe de commande 7 est solidaire du piston de commande 12. La partie du piston de commande 12 en contact avec les surfaces internes du cylindre de commande 112, pouvant présenter un profil bombé, forme la liaison linéaire annulaire E2.

Sur ces figures, le carter-cylindres 100 est également muni d'un dispositif presseur 90 permettant de compenser les jeux de fonctionnement pouvant exister entre les organes mobiles du moteur. Dans le cadre de la présente invention, on considérera que le dispositif presseur 90 est partie intégrante du carter-cylindres 100.

L'organe de commande 7 est en liaison avec le dispositif presseur 90 du carter-cylindres 100.

Sur la figure 7, correspondant à la solution préférée de mise en œuvre de cette liaison on a représenté un exemple de réalisation de la liaison linéaire rectiligne de direction longitudinale E1. L'organe de commande 7 présente sur cette figure une surface d'appui cylindrique d'axe longitudinal en contact avec une surface plane d'un piston du dispositif presseur 90. Dans une variante non représenté, la surface cylindrique d'axe longitudinal peut être portée par le piston du dispositif presseur, et entrer en contact avec une surface plane formée sur l'organe de commande 7.

Sur la figure 7bis, on a représenté un exemple de réalisation de la liaison linéaire annulaire E1' correspondant à la variante de la solution préférée de mise en œuvre de cette liaison. Un corps 91 formé d'une portion sphérique coopère avec un évidemment complémentaire du dispositif presseur 90 afin d'assurer une liaison rotule, mobile en rotation suivant les trois axes principal, transversal et longitudinal. L'organe de commande 7, sur sa face opposée aux dentures de grandes dimensions, présente une rainure dans laquelle peut coulisser une languette du corps 91, du coté opposé à sa portion sphérique. On bloque ainsi la translation suivant l'axe longitudinal, la translation suivant l'axe transversal étant naturellement bloqué par la mise en contact de l'organe de commande 7 sur le dispositif presseur du carter-cylindres 100. Naturellement, on pourrait choisir de placer la rainure sur le corps 91, et la languette sur l'organe de commande 7.

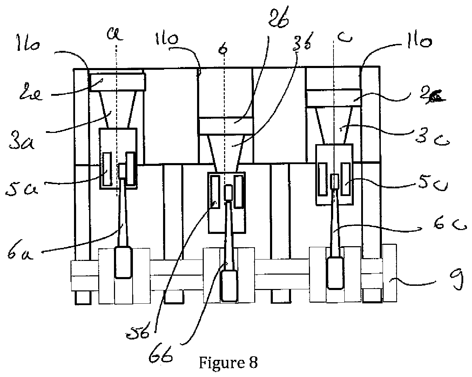

On a représenté schématiquement sur la figure 8 une position d'équilibre de certains éléments mobiles du dispositif de transmission 1 qui vient d'être décrit en exemple. On note, par opposition à la position prise par ces éléments représentés sur la figure 1b dans le cas d'un moteur de l'état de la technique, que pour chacun des ensembles-cylindres du moteur :
- les pistons de combustion 2a, 2b et 2c et les organes de transmission 3a, 3b et 3c sont bien orientés selon une direction principale, limitant ainsi les frottements avec les cylindres de combustion 110 ;
- Les roues dentées 5a, 5b et 5c sont centrées sur les organes de transmission 3a, 3b, 3c ;
- Les bielles 6a, 6b, et 6c sont également orientées dans une direction principale, assurant une transmission efficace des efforts et limitant l'usure au niveau des coussinets de bielle.

Il est bien apparent sur cette figure 8 que les organes représentés du dispositif de transmission 1 gardent une orientation déterminée vis-à-vis du carter-cylindres 100 malgré la perturbation qui est apportée par les déplacements entre organes mobiles haut et organes mobiles bas, liés dans cet exemple particulier à la dilatation.

Bien entendu, l'invention n'est pas limitée à l'exemple décrit et on peut y apporter des variantes de réalisation sans sortir du cadre de l'invention tel que défini par les revendications.

## Revendications

1. Dispositif de transmission (1), notamment pour un moteur à taux de compression et/ou cylindrée variable, le dispositif de transmission (1) comprenant dans un carter-cylindres (100):
- un piston de combustion (2), apte à se déplacer dans un cylindre de combustion (110) du moteur, et solidaire d'un organe de transmission (3) ;
- une roue dentée (5) coopérant avec une première crémaillère de l'organe de transmission (3) et assurant la transmission du mouvement entre le piston de combustion (2) et un vilebrequin (9) du moteur ;
- une bielle (6) coopérant, en une première extrémité, avec la roue dentée (5) et, en une seconde extrémité, avec le vilebrequin (9) ;
- un organe de commande (7) coopérant avec la roue dentée (5) et solidaire d'un piston de commande (12) ;
le dispositif de transmission (1) étant **caractérisé en ce que** :
- le piston de combustion (2) et l'organe de transmission (3) sont en liaison glissière (A) avec le carter-cylindres (100) suivant une direction principale ;
- la liaison (B) entre la roue dentée (5) et la bielle est une liaison linéaire annulaire de direction longitudinale;
- la liaison (C) entre la roue dentée (5) et l'organe de transmission (3) est formée d'une première liaison pignon-crémaillère et d'une liaison linéaire annulaire suivant la direction principale ;
- la liaison (D) entre la roue dentée (5) et l'organe de commande (7) est formée d'une liaison pignon-crémaillère et d'une liaison linéaire annulaire suivant la direction principale.

2. Dispositif de transmission (1) selon la revendication 1 dans lequel la liaison glissière (A) se décompose en :
- une liaison linéaire annulaire (A1) entre le piston de combustion (2) et le cylindre de combustion (110) de direction principale et de centre formé par le piston de combustion (110);
- une liaison linéaire rectiligne (A21) de direction longitudinale et une liaison ponctuelle (A22) de direction longitudinale entre l'organe de transmission (3) et le carter-cylindres (100).

3. Dispositif de transmission (1) selon la revendication 2 dans lequel la liaison linéaire rectiligne (A21) entre l'organe de transmission (3) et le carter-cylindres (100) est réalisée par un rouleau (40) prenant appui sur une platine (41) du carter-cylindres (100) et sur l'organe de transmission (3).

4. Dispositif de transmission (1) selon la revendication 3 dans lequel la liaison ponctuelle (A22) entre l'organe de transmission (3) et le carter-cylindres (100) comprend une nervure (43) et une rainure de guidage (31), adaptée pour recevoir la nervure (43), l'une étant disposée sur le rouleau (40) et l'autre sur l'organe de transmission (3).

5. Dispositif de transmission (1) selon l'une des revendications précédentes dans lequel la roue dentée (5) présente un évidemment central (53) dans lequel débouche un alésage (50) pour la mise en place d'un pied de la bielle (61) par l'intermédiaire d'un axe de transmission (62) et dans lequel la liaison (B) linéaire annulaire entre la roue dentée (5) et la bielle (6) est obtenue par :
- un espacement entre les surfaces internes de l'évidemment central (53) de la roue dentée (5) et les faces latérales du pied de bielle (61) permettant le déplacement en translation de la bielle sur l'axe de transmission (62);
- un profil arrondi de l'alésage du pied de bielle (61) permettant le rotulage de la bielle (6) dans l'évidemment central (53).

6. Dispositif de transmission (1) selon la revendication précédente dans lequel la liaison (C) linéaire annulaire entre la roue dentée (5) et l'organe de transmission (3) comprend respectivement une bande de roulement (55) de la roue dentée (5) en contact avec une piste de roulement (30) de l'organe de transmission (3), dont les formes bombée et en gouttière coopèrent.

7. Dispositif de transmission (1) selon l'une des revendications précédentes dans lequel la liaison (D) linéaire annulaire entre la roue dentée (5) et l'organe de commande (7) comprend respectivement une bande de roulement (55) de la roue dentée (5) en contact avec une piste de roulement (70) de l'organe de commande (7), dont les formes bombées et en gouttière coopèrent.

8. Dispositif de transmission (1) selon l'une des revendications précédentes dans lequel la liaison entre le piston de commande (12) et le carter-cylindres (100) est une liaison linéaire annulaire (E2, E'2) de direction principale et de centre formée par le piston de commande (12) .

9. Dispositif de transmission (1) selon la revendication précédente dans lequel la liaison entre l'organe de commande (7) et le carter-cylindres (100) est une liaison (E1) linéaire rectiligne de direction longitudinale.

10. Dispositif de transmission (1) selon la revendication précédente dans lequel la liaison (E1) linéaire rectiligne entre l'organe de commande (7) et le carter-cylindres (100) est réalisée par le contact entre une surface d'appui de l'organe de commande (7) avec une surface du carter-cylindres (100), l'une étant cylindrique d'axe longitudinal, l'autre étant plane.

11. Dispositif de transmission (1) selon la revendication 9 dans lequel la liaison entre l'organe de commande (7) et le carter-cylindres (100) comprend une liaison (E'1) linéaire annulaire de direction principale.

12. Dispositif de transmission (1) selon la revendication précédente dans lequel la liaison linéaire annulaire (E'1) entre l'organe de commande (7) et le carter-cylindres (100) est réalisée par un corps (91) formé d'une portion sphérique en contact avec un évidemment complémentaire du carter-cylindres (100), le corps (91) comportant sur la face opposée à la portion sphérique une languette ou une rainure coopérant, respectivement avec une rainure ou une languette de l'organe de commande.

13. Dispositif de transmission (1) selon l'une des revendications précédentes, dans lequel le carter-cylindres (100) est muni d'un dispositif presseur (90) de compensation des jeux fonctionnels.

## Patentansprüche

1. Übertragungsvorrichtung (1), insbesondere für einen Motor mit veränderlichem Verdichtungsverhältnis und/oder Hubvolumen, wobei die Übertragungsvorrichtung (1) in einem Zylinderkurbelgehäuse (100) folgendes umfasst:
- einen Verbrennungskolben (2), der sich in einem Verbrennungszylinder (110) des Motors bewegen kann und fest mit einem Übertragungselement (3) verbunden ist;
- ein Zahnrad (5), das mit einer ersten Zahnstange des Übertragungselements (3) zusammenwirkt und die Übertragung der Bewegung zwischen dem Verbrennungskolben (2) und einer Kurbelwelle (9) des Motors gewährleistet;
- eine Pleuelstange (6), die an einem ersten Ende mit dem Zahnrad (5) und an einem zweiten Ende mit der Kurbelwelle (9) zusammenwirkt;
- ein Steuerelement (7), das mit dem Zahnrad (5) zusammenwirkt und fest mit einem Steuerkolben (12) verbunden ist, wobei die Übertragungsvorrichtung (1) **dadurch gekennzeichnet ist, dass**:
- der Verbrennungskolben (2) und das Übertragungselement (3) in einer Hauptrichtung in einer Gleitverbindung (A) mit dem Zylinderkurbelgehäuse (100) stehen;
- die Verbindung (B) zwischen dem Zahnrad (5) und der Pleuelstange eine ringförmige lineare Verbindung in Längsrichtung ist;
- die Verbindung (C) zwischen dem Zahnrad (5) und dem Übertragungselement (3) durch eine erste Zahnrad-Zahnstangenverbindung und eine ringförmige lineare Verbindung in der Hauptrichtung gebildet wird;
- die Verbindung (D) zwischen dem Zahnrad (5) und dem Steuerelement (7) durch eine Zahnrad-Zahnstangenverbindung und eine ringförmige lineare Verbindung in der Hauptrichtung gebildet wird.

2. Übertragungsvorrichtung (1) nach Anspruch 1, in der sich die Gleitverbindung (A) zusammensetzt aus:
- einer ringförmigen linearen Verbindung (Al) zwischen dem Verbrennungskolben (2) und dem Verbrennungszylinder (110) in Hauptrichtung und einer durch den Verbrennungskolben (110) gebildeten Mitte;
- einer geradlinigen linearen Verbindung (A21) in Längsrichtung und einer punktuellen Verbindung (A22) in Längsrichtung zwischen dem Übertragungselement (3) und dem Zylinderkurbelgehäuse (100).

3. Übertragungsvorrichtung (1) nach Anspruch 2, bei der die geradlinige lineare Verbindung (A21) zwischen dem Übertragungselement (3) und dem Zylinderkurbelgehäuse (100) durch eine Walze (40) hergestellt wird, die auf einer Platte (41) des Zylinderkurbelgehäuses (100) und auf dem Übertragungselement (3) aufliegt.

4. Übertragungsvorrichtung (1) nach Anspruch 3, bei der die punktuelle Verbindung (A22) zwischen dem Übertragungselement (3) und dem Zylinderkurbelgehäuse (100) eine Rippe (43) und eine Führungsnut (31) zur Aufnahme der Rippe (43) umfasst, wobei das eine Element auf der Walze (40) und das andere auf dem Übertragungselement (3) angeordnet ist.

5. Übertragungsvorrichtung (1) nach einem der vorhergehenden Ansprüche, bei der das Zahnrad (5) eine Aussparung in der Mitte aufweist, zu der eine Bohrung (50) zum Einsetzen eines Pleuelstangenfußes (61) über eine Antriebswelle (62) führt und in der die ringförmige lineare Verbindung (B) zwischen dem Zahnrad (5) und der Pleuelstange (6) erzielt wird durch:
- eine Beabstandung der Innenflächen der mittigen Aussparung (53) des Zahnrads (5) von den Seitenflächen des Pleuelstangenfußes (61), die die translatorische Bewegung der Pleuelstange auf der Antriebswelle (62) ermöglicht;
- ein abgerundetes Profil der Bohrung des Pleuelstangenfußes (61), wodurch die Pleuelstange (6) in der mittigen Aussparung (53) gedreht werden kann.

6. Übertragungsvorrichtung (1) nach dem vorhergehenden Anspruch, in der die ringförmige lineare Verbindung (C) zwischen dem Zahnrad (5) und dem Übertragungselement (3) jeweils eine Lauffläche (55) des Zahnrades (5) in Kontakt mit einer Laufbahn (30) des Übertragungselements (3) umfasst, deren gewölbte bzw. rinnenartige Formen zusammenwirken.

7. Übertragungsvorrichtung (1) nach einem der vorhergehenden Ansprüche, in der die ringförmige lineare Verbindung (D) zwischen dem Zahnrad (5) und dem Steuerelement (7) jeweils eine Lauffläche (55) des Zahnrades (5) in Kontakt mit einer Laufbahn (70) des Steuerelements (7) umfasst, deren gewölbte bzw. rinnenartige Formen zusammenwirken.

8. Übertragungsvorrichtung (1) nach einem der vorstehenden Ansprüche, bei der die Verbindung zwischen dem Steuerkolben (12) und dem Zylinderkurbelgehäuse (100) eine ringförmige lineare Verbindung (E2, E'2) in Hauptrichtung mit einer durch den Steuerkolben (12) gebildeten Mitte ist.

9. Übertragungseinrichtung (1) nach dem vorstehenden Anspruch, bei der die Verbindung zwischen dem Steuerelement (7) und dem Zylinderkurbelgehäuse (100) eine geradlinige lineare Verbindung (El) in Längsrichtung ist.

10. Übertragungsvorrichtung (1) nach dem vorhergehenden Anspruch, bei der die geradlinige lineare Verbindung (El) zwischen dem Steuerelement (7) und dem Zylinderkurbelgehäuse (100) durch den Kontakt einer Auflagefläche des Steuerelements (7) mit einer Fläche des Zylinderkurbelgehäuses (100) hergestellt wird, wobei eine Fläche zylindrisch ist mit einer Längsachse und die andere flach ist.

11. Übertragungsvorrichtung (1) nach Anspruch 9, in der die Verbindung zwischen dem Steuerelement (7) und dem Zylinderkurbelgehäuse (100) eine ringförmige lineare Verbindung (E'1) in Hauptrichtung aufweist.

12. Übertragungsvorrichtung (1) nach dem vorhergehenden Anspruch, in der die ringförmige lineare Verbindung (E'1) zwischen dem Steuerelement (7) und dem Zylinderkurbelgehäuse (100) durch einen Körper (91) hergestellt wird, der gebildet wird aus einem kugelförmigen Abschnitt, der mit einer komplementären Aussparung des Zylinderkurbelgehäuses (100) in Kontakt steht, wobei der Körper (91) auf der dem kugelförmigen Abschnitt gegenüberliegenden Seite eine Feder oder Nut aufweist, die jeweils mit einer Nut oder Feder des Steuerelements zusammenwirken.

13. Übertragungseinrichtung (1) nach einem der vorhergehenden Ansprüche, in der das Zylinderkurbelgehäuse (100) mit einer Andruckvorrichtung (90) zum Ausgleich des funktionalen Spiels versehen ist.

## Claims

1. A transmission device (1), particularly for an engine with variable compression rate and/or variable displacement, the transmission device (1) comprising, in a cylinder housing (100):
- a combustion piston (2), capable of moving in a combustion cylinder (110) of the engine, and secured to a transmission member (3);
a gear (5) engaging with a first rack of the transmission member (3) and proving transmission of the movement between the combustion piston (2) and a crankshaft (9) of the engine;
a connecting rod (6) engaging, at a first end, with the gear (5) and at a second end with the crankshaft (9);
- a control member (7) engaging with the gear (5) and secured to a control piston (12); the transmission device (1) being **characterized in that**:
- the combustion piston (2) and the transmission member (3) are slidably (A) linked with the cylinder housing (100) in a main direction;
- the link (B) between the gear (5) and the connecting rod is an annular linear link in a longitudinal direction;
- the link (C) between the gear (5) and the transmission member (3) is formed by a first rack link and an annular linear link in the main direction;
- the link (D) between the gear (5) and the control member (7) is formed by a rack link and an annular linear link in the main direction.

2. A transmission device (1) according to claim 1, wherein the slide link (A) consists of:
- an annular linear link (Al) between the combustion piston (2) and the combustion cylinder (110) in the main direction and the centre of which is formed by the combustion piston (110);
- a straight linear link (A21) in the longitudinal direction and a point link (A22) in the longitudinal direction between the transmission member (3) and the cylinder housing (100).

3. A transmission device (1) according to claim 2, wherein the straight linear link (A21) between the transmission member (3) and the cylinder housing (100) is provided by a roller (40) supported on a plate (41) of the cylinder housing (100) and on the transmission member (3).

4. A transmission device (1) according to claim 3, wherein the point link (A22) between the transmission member (3) and the cylinder housing (100) comprises a rib (43) and a guide groove (31), adapted to receive the rib (43), one being arranged on the roller (40) and the other on the transmission member (3).

5. A transmission device (1) according to one of the preceding claims, wherein the gear (5) has a central recess (53) wherein a bore (50) opens for fitting an eye of the connecting rod (61) by means of a transmission axis (62) and wherein the annular linear link (B) between the gear (5) and the connecting rod (6) is obtained by:
- a spacing between the inner surfaces of the central recess (53) of the gear (5) and the lateral surfaces of the connecting rod eye (61) enabling the translational displacement of the connecting rod on the transmission axis (62);
- a rounded profile of the bore of the connecting rod eye (61) enabling the connecting rod (6) to be rotated in the central recess (53).

6. A transmission device (1) according to the preceding claim, wherein the annular linear link (C) between the gear (5) and the transmission member (3) respectively comprises a running tread (55) of the gear (5) in contact with a raceway (30) of the transmission member (3), the bump and gutter shapes of which cooperate.

7. A transmission device (1) according to one of the preceding claims, wherein the annular linear link (D) between the gear (5) and the control member (7) comprises a running tread (55) of the gear (5) in contact with a raceway (70) of the control member (7), the bump and gutter shapes of which cooperate.

8. A transmission device (1) according to one of the preceding claims, wherein the link between the control piston (12) and the cylinder housing (100) is an annular linear link (E2, E'2) in the main direction and the centre of which is formed by the control piston (12).

9. A transmission device (1) according to the preceding claim, wherein the link between the control member (7) and the cylinder housing (100) is a straight linear link (El) in the longitudinal direction.

10. A transmission device (1) according to the preceding claim, wherein the straight linear link (El) between the control member (7) and the cylinder housing (100) is provided by contact between a surface supporting the control member (7) with a surface of the cylinder housing (100), one being cylindrical with a longitudinal axis, the other being flat.

11. A transmission device (1) according to claim 9, wherein the link between the control member (7) and the cylinder housing (100) comprises an annular linear link (E'1) in the main direction.

12. A transmission device (1) according to the preceding claim, wherein the annular linear link (E'1) between the control member (7) and the cylinder housing (100) is provided by a body (91) formed by a spherical portion in contact with a complementary recess of the cylinder housing (100), the body (91) having, on the side opposite the spherical portion, a flat key or a groove respectively engaging with a groove or a flat key of the control member.

13. A transmission device (1) according to one of the preceding claims, wherein the cylinder housing (100) is provided with a pressure-applying device (90) for compensating for running clearances.
